# EUROPEAN PATENT APPLICATION

(11) **EP 4 017 183 A1**
(43) Date of publication of application: **22.06.2022**
(21) Application number: 20883872.2
(22) Date of filing: 17.02.2020
(51) Int. Cl.: H04W 72/04

(54) **CONFIGURATION INFORMATION DETERMINATION METHOD AND APPARATUS, AND TERMINAL**

(30) Priority: 08.11.2019 CN 201911089069
(71) Applicant: GUANGDONG OPPO MOBILE TELECOMMUNICATIONS CORP., LTD., Dongguan, Guangdong 523860 (CN)
(72) Inventor: XU, Jing, Dongguan, Guangdong 523860 (CN); LIN, Yanan, Dongguan, Guangdong 523860 (CN)
(74) Representative: Rossi, Ugo
(86) International application number: PCT/CN2020/075502
(87) International publication number: WO 2021/088264

(57) **Abstract**

Provided are a configuration information determination method and apparatus, and a terminal. The method comprises: a terminal receiving first downlink control information (DCI); and if there is no designated domain in the first DCI, the terminal determining, according to network configuration signaling or a pre-set rule, a value of a designated domain used for data transmission and configured by the first DCI.

## Description

### Technical Field

The present application relates to the field of mobile communication technologies, in particular to a method and apparatus for determining configuration information, and a terminal.

### Background

When an Ultra-reliable Low Latency (URLLC) service is scheduled in the 5G new air interface New Radio (NR) standard Release 16 (Rel-16), a protocol corresponding to the URLLC service is formulated, and some domains in an existing protocol may be configured as 0 bit. At this time, when uplink or downlink scheduling is performed on the URLLC service, configuration information will be missing and system efficiency will be reduced.

### Summary

Embodiments of the present application provide a method and apparatus for determining configuration information, and a terminal, which can improve system efficiency.

Technical solutions of the present application are implemented as follows.

An embodiment of the present application provides a method for determining configuration information, including: receiving, by a terminal, first downlink control information (DCI); and determining, by the terminal, according to a network configuration signaling or a pre-set rule, a value of a designated domain used for data transmission configured through the first DCI if there is no designated domain in the first DCI.

An embodiment of the present application provides an apparatus for determining configuration information, including: a receiving unit configured for a terminal to receive first Downlink Control Information (DCI); and a determining unit configured for the terminal to determine a value of a designated domain used for data transmission configured through the first DCI according to a network configuration signaling or a pre-set rule if there is no designated domain in the first DCI.

An embodiment of the present application provides a terminal, including: a processor and a memory, wherein the memory is configured to store a computer program, and the processor is configured to call and run the computer program stored in the memory, to perform the method for determining configuration information described above.

An embodiment of the present application provides a chip, including: a processor, configured to call a computer program from a memory and run the computer program to enable a device having the chip installed therein performs the method for determining configuration information described above.

An embodiment of the present application provides a computer readable storage medium, which is configured to store a computer program, wherein the computer program enables a computer to perform the method for determining configuration information described above.

An embodiment of the present application provides a computer program product, which includes computer program instructions, wherein the program instructions enable a computer to perform the method for determining configuration information described above.

An embodiment of the present application provides a computer program, which enables a computer to perform the method for determining configuration information described above.

Through the above technical solutions, when a terminal determines that there is no designated domain in first DCI, it is indicated that the designated domain is configured as 0 bit. At this time, the terminal determines configuration information of the first DCI according to a network configuration signaling or a pre-set rule, and can determine the configuration information by itself when the configuration information is missing, thereby improving system efficiency.

### Brief Description of Drawings

Accompanying drawings described herein are intended to provide further understanding of the present application, and form a part of the present application. Illustrative embodiments of the present application and descriptions thereof are intended to explain the present application, but not constitute an inappropriate limitation to the present application. In the accompanying drawings, there are following drawings.
FIG. 1 is a schematic diagram of architecture of a communication system according to an embodiment of the present application.
FIG. 2 is a schematic flowchart of a method for determining configuration information according to an embodiment of the present application.
FIG. 3 is a schematic flowchart of an apparatus for determining configuration information according to an embodiment of the present application.
FIG. 4 is a schematic diagram of a structure of a communication device according to an embodiment of the present application.
FIG. 5 is a schematic diagram of a structure of a chip according to an embodiment of the present application.
FIG. 6 is a schematic block diagram of a communication system according to an embodiment of the present application.

### Detailed Description

Technical solutions in the embodiments of the present application will be described below with reference to the accompanying drawings in the embodiments of the present application. It is apparent that the embodiments described are just a part of the embodiments of the present application, rather than all of the embodiments of the present application. According to the embodiments of the present application, all other embodiments obtained by a person of ordinary skill in the art without making inventive efforts belong to the protection scope of the present application.

The technical solutions of the embodiments of the present application may be applied to various communication systems, such as a Long Term Evolution (LTE) system, an LTE Frequency Division Duplex (FDD) system, an LTE Time Division Duplex (TDD) system, a system, a 5G system, or a future communication system.

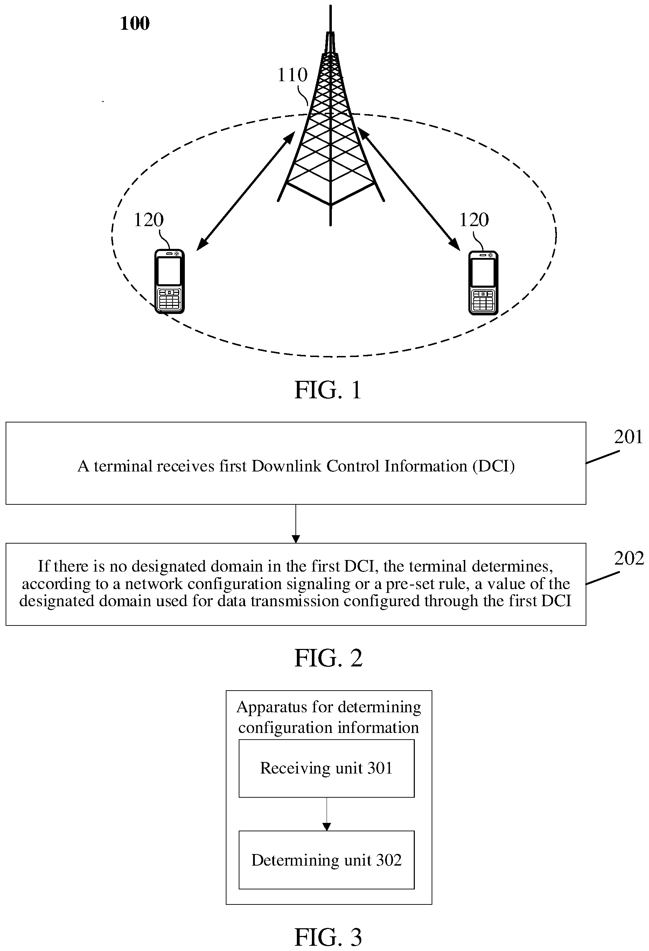

Exemplarily, a communication system 100 to which an embodiment of the present application is applied is shown in FIG. 1. The communication system 100 may include a network device 110. The network device 110 may be a device that communicates with terminals 120 (or referred to as communication terminals, or terminals). The network device 110 may provide communication coverage for a specific geographical area, and may communicate with a terminal located within the coverage area. Optionally, the network device 110 may be an Evolutional Node B (eNB or eNodeB) in an LTE system, or a radio controller in a Cloud Radio Access Network (CRAN), or the network device may be a mobile switching center, a relay station, an access point, a vehicle-mounted device, a wearable device, a hub, a switch, a bridge, a router, a network side device in a 5G network, or a network device in a future communication system, etc.

The communication system 100 further includes at least one terminal 120 located within the coverage area of the network device 110. The "terminal" as used herein includes, but is not limited to, an apparatus configured to receive/send a communication signal via a wired line connection, for example, via a connection of Public Switched Telephone Networks (PSTN), a Digital Subscriber Line (DSL), a digital cable, or a direct cable; and/or another data connection/network; and/or via a wireless interface, for instance, for a cellular network, a Wireless Local Area Network (WLAN), a digital television network such as a Digital Video Broadcasting Handheld (DVB-H) network, a satellite network, or an Amplitude Modulation-Frequency Modulation (AM-FM) broadcast sender; and/or another terminal; and/or an Internet of Things (IoT) device. A terminal configured to communicate via a wireless interface may be referred to as "a wireless communication terminal", "a wireless terminal", or "a mobile terminal". Examples of the mobile terminal include, but are not limited to, a satellite or cellular phone; a Personal Communications System (PCS) terminal which may combine a cellular radio phone with data processing, facsimile, and data communication capabilities; a Personal Digital Assistant (PDA) that may include a radio phone, a pager, internet/intranet access, a Web browser, a memo pad, a calendar, and/or, a Global Positioning System (GPS) receiver; and a conventional laptop and/or palmtop receiver, or another electronic apparatus including a radio phone transceiver. The terminal may refer to an access terminal, a User Equipment (UE), a subscriber unit, a subscriber station, a mobile station, a mobile platform, a remote station, a remote terminal, a mobile device, a user terminal, a terminal, a wireless communication device, a user agent, or a user apparatus. The access terminal may be a cellular phone, a cordless phone, a Session Initiation Protocol (SIP) phone, a Wireless Local Loop (WLL) station, a Personal Digital Assistant (PDA), a handheld device with a wireless communication function, a computing device, or another processing device connected to a wireless modem, a vehicle-mounted device, a wearable device, a terminal in a 5G network, or a terminal in a future evolved Public Land Mobile Network (PLMN), etc.

Optionally, Device to Device (D2D) communication may be performed between the terminals 120.

Optionally, the 5G communication system or 5G network may also be referred to as a New Radio (NR) system or an NR network

FIG. 1 illustrates one network device and two terminals. Optionally, the communication system 100 may include multiple network devices, and another quantity of terminals may be included within a coverage area of each network device, which is not limited in the embodiments of the present application.

Optionally, the communication system 100 may also include another network entity, such as a network controller, a mobile management entity, etc., which is not limited in the embodiments of the present application.

It should be understood that a device with a communication function in a network/system in the embodiments of the present application may also be referred to as a communication device. Taking the communication system 100 shown in FIG. 1 as an example, the communication device may include a network device 110 and terminals 120 which have communication functions, and the network device 110 and the terminals 120 may be specific devices described above, which will not be repeated here. The communication device may also include another device in the communication system 100, such as another network entity, such as a network controller, a mobile management entity, etc., which is not limited in the embodiments of the present application.

It should be understood that the terms "system" and "network" are often used interchangeably herein. The term "and/or" herein refers to an association relationship describing associated objects only, which indicates that three relationships may exist, for example, A and/or B may indicate three cases: A alone, both A and B at the same time, and B alone. In addition, the symbol "/" herein generally indicates that objects before and after the symbol "/" have an "or" relationship.

In order to facilitate understanding of the technical solutions of the embodiments of the present application, technical solutions related to the embodiments of the present application will be explained below.

A URLLC service is one of three major services supported by 5G NR, wherein service features are that generation of data packets is bursty and random, and has a high requirement for latency. In the 5G NR standard Rel-16, for corresponding to the URLLC service, a new Downlink Control Information (DCI) format required for Uplink (UL) scheduling and Downlink (DL) scheduling is configured in following protocols, specifically as follows.

### Protocol 1

For a new DCI format for Downlink (DL) scheduling for Rel-16 URLLC, a configurable quantity of bits for following fields is supported.
- Antenna port(s) (0 or 4/5/6 bits)
   A new Radio Resource Control (RRC) configuration parameter is introduced for this configuration.
- Transmission configuration indication (0 or 3 bits)
   FFS 1 or 2 bits
- Sounding Reference Signal (SRS) request (0 or 2 or 3 bits)
   FFS 1 bit
- Demodulation Reference Signal (DMRS) sequence initialization (0 or 1 bit)

### Protocol 2

For a new DCI format for Uplink (UL) scheduling for Rel-16 URLLC, a configurable quantity of bits for following fields is supported.
- SRS resource indicator (0 or 1 or 2 or 3 or 4 bits)
   FFS details of configuration
- Pre-coding information and a quantity of layers (0 or 1 or 2 or 3 or 4 or 5 or 6 bits)
   FFS details of configuration
- Antenna port(s) (0 or 2 or 3 or 4 or 5 bits)
   FFS details of configuration
- SRS request (0 or 2 or 3 bits)
   FFS details of configuration
- DMRS sequence initialization (0 or 1 bit)

A new RRC parameter is introduced to configure whether this field is present in DCI or not.

If the field is present, a quantity of bits is determined in a same way as in Rel-15.
- DMRS-Phase Tracking Reference Signal (PTRS) association (0 or 2 bits)
   FFS details of configuration

### Protocol 3

A Hybrid Automatic Repeat Request (HARQ) process number field in a new DCI format (in DL) and a new DCI format (in UL) is supported to be additionally configurable to 0 or 1 bit.
- Values of the HARQ process number field may be mapped from 0 to 2^ (a quantity of bits) -1.
- Note: no additional specification effort for configuring 0 bit or 1 bit is required.

### Protocol 4

A configurable size of "Physical Uplink Control Channel (PUCCH) resource indicator (0 or 1 or 2 or 3 bits)" is supported for a new DCI format for DL scheduling.
- A new RRC parameter is introduced for configuration.

In the above four protocols, the Antenna port field, SRS request field, HARQ process number field, and the PUCCH resource indicator field may be configured as 0 bit, which leads to missing of configuration information and further reduces system efficiency. To this end, following technical solutions of the embodiments of the present application are proposed.

FIG. 2 is a schematic flowchart of a method for determining configuration information according to an embodiment of the present application. As shown in FIG. 2, the method for determining configuration information includes the following acts.

In S201, a terminal receives first Downlink Control Information (DCI).

The method for determining the configuration information provided by the embodiment of the present application is suitable for a scenario where the terminal performs UL scheduling or DL scheduling for a URLLC service.

In an embodiment of the present application, first DCI is of a new DCI format configured in the 5G NR standard Rel-16, such as DCI format 0-2.

In an embodiment of the present application, a designated domain includes an information domain that may be configured as 0 bit in a protocol, such as an Antenna port domain, an SRS request domain, a HARQ process number domain, and a PUCCH resource indicator domain, which is specifically selected according to an actual situation and is not specifically limited in the embodiment of the present application.

Exemplarily, a quantity of bits in the Antenna port domain of the first DCI is configured through a network, and a configured range includes at least two values of 0 and greater than 0, such as 0/2/3/4/5 bits.

Exemplarily, a quantity of bits in the SRS request domain of the first DCI is configured through a network, and a configured range includes at least two values of 0 and greater than 0, such as 0/2/3 bits.

Exemplarily, a quantity of bits in the HARQ process number domain of the first DCI is configured through a network, and a configured range includes at least two values of 0 and greater than 0, such as 0/1/2/3/4 bits.

Exemplarily, a quantity of bits in the PUCCH resource indicator domain of the first DCI is configured through a network, and a configured range includes at least two values of 0 and greater than 0, such as 0/1/2/3 bits.

In S202, if there is no designated domain in the first DCI, the terminal determines, according to a network configuration signaling or a pre-set rule, a value of the designated domain used for data transmission configured through the first DCI.

After receiving first DCI, a terminal determines whether there is the designated domain in the first DCI according to a high-layer signaling, and when the terminal determines that there is no designated domain in the first DCI, the terminal determines a value of the designated domain configured to data transmission configured through the first DCI according to a network configuration signaling or a pre-set rule.

In an optional embodiment, when the designated domain is an Antenna port domain, the terminal determines whether there is an Antenna port domain in the first DCI in any of following four ways.
1. If the terminal configures the Antenna port domain as 0 bit according to a high-layer signaling, the terminal determines that there is no Antenna port domain in the first DCI.
2. The terminal receives at least two sets of Demodulation Reference Signal-Uplink Configurations (DMRS-UplinkConfigs) corresponding to at least two pieces of DCI, wherein the at least two pieces of DCI include the first DCI; when there is no DMRS-UplinkConfig corresponding to the first DCI in the at least two sets of DMRS-UplinkConfigs, the terminal determines that there is no Antenna port domain in the first DCI.
   It should be noted that independently configuring a DMRS-UplinkConfig parameter for DCI may adapt to different service adjustment transmission strategies, and then meet different service requirements, for example, single-port transmission is used for URLLC service to ensure reliability; multi-port transmission is used for enhanced Mobile Broadband (eMBB) to increase a transmission rate.
3. The terminal receives at least two sets of Physical Uplink Shared Channel Configurations (PUSCH-Configs) corresponding to at least two pieces of DCI; the terminal determines that there is no Antenna port domain in the first DCI when any one of following conditions is met: when a Physical Uplink Shared Channel Configuration corresponding to the first DCI is not configured with a DMRS-UplinkConfig, or is not configured with a transmission Configuration (txConfig), or a txConfig is non-Codebook, or a maximum Rank (maxRank) configuration is 1.
   It should be noted that a PUSCH-Config parameter is independently configured for DCI, which enhances the flexibility of uplink transmission, can adapt to different service adjustment transmission strategies, and not only meets service requirements, but also reduces overhead of DCI and increases its reliability.
4. If the terminal receives a set of DMRS-UplinkConfig or a set of PUSCH-Config corresponding to at least two pieces of DCI, wherein the at least two pieces of DCI include the first DCI; and the terminal determines that a quantity of bits of the Antenna port domain is 0 according to a high-layer signaling, it is determined that there is no Antenna port domain in the first DCI.

It should be noted that carrying at least two pieces of DCI in a set of DMRS-UplinkConfig or carrying at least two pieces of DCI in a set of PUSCH-Config enables the at least two pieces of DCI to share an RRC signaling, thus reducing signaling overhead.

In another optional embodiment, when the designated domain is an SRS request domain, the terminal determines whether there is an SRS request domain in the first DCI in any of following three ways.
1. If the terminal determines that a quantity of bits of the Sounding Reference Signal request domain is 0 according to a high-layer signaling, it is determined that there is no Sounding Reference Signal request domain in the first DCI.
2. The terminal receives at least two sets of aperiodic Sounding Reference Signal (aperiodicSRS) configurations corresponding to at least two pieces of DCI, wherein the at least two pieces of DCI include the first DCI; when there is no aperiodic Sounding Reference Signal configuration corresponding to the first DCI in the at least two sets of aperiodic Sounding Reference Signal configurations, i.e., the first DCI is not configured with an aperiodicSRS such as Aperiodic IC00, the terminal determines that there is no SRS request domain in the first DCI.

Exemplary, configuration information of Aperiodic00 is as follows.

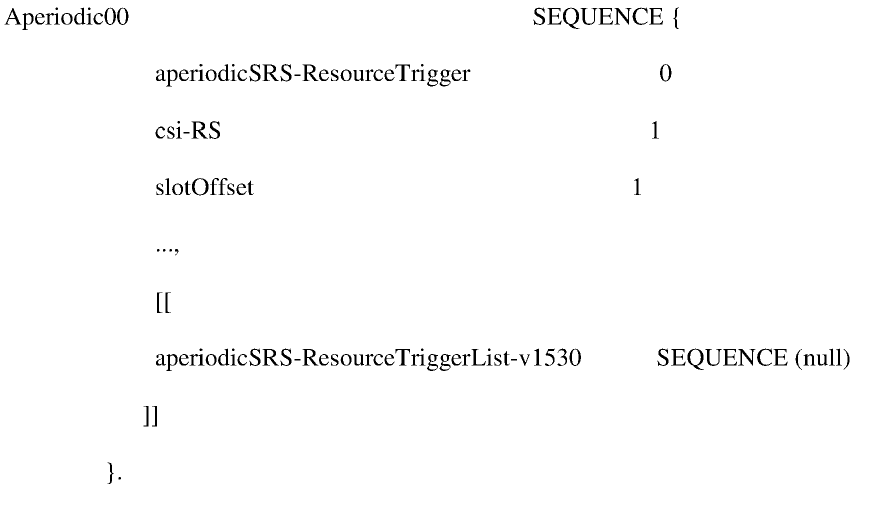

It should be noted that independently configuring an aperiodicSRS parameter for DCI can adapt to different service adjustment transmission strategies, and then meet different service requirements, for example, non-codebook transmission is used for a URLLC service to ensure reliability; and codebook transmission is adopted for an eMBB service to increase a transmission rate.

3. If the terminal receives a set of aperiodicSRS configuration corresponding to at least two pieces of DCI, wherein the at least two pieces of DCI include the first DCI, and the terminal determines that a quantity of bits in the SRS request domain is 0 according to a high-layer signaling, then it is determined that there is no SRS request domain in the first DCI.

It should be noted that carrying at least two pieces of DCI in a set of aperiodicSRS configuration can enable the at least two pieces of DCI to share an RRC signaling, thus reducing signaling overhead.

In another optional embodiment, when the designated domain is a HARQ process number domain, the terminal determines whether there is a HARQ process number domain in the first DCI in any of following three ways.
1. If the terminal configures the HARQ process number domain as 0 bit according to a high-layer signaling, the terminal determines that there is no HARQ process number domain in the first DCI.
2. The terminal receives at least two sets of HARQ process configurations corresponding to at least two pieces of DCI, wherein the at least two pieces of DCI include the first DCI; when there is no HARQ process configuration corresponding to the first DCI in the at least two sets of HARQ process configurations or when a HARQ process configuration corresponding to the first DCI includes a value, the terminal determines that there is no HARQ process number domain in the first DCI.
   It should be noted that independently configuring a HARQ process parameter for DCI can adapt to different service adjustment transmission strategies, not only meet different service requirements, but also reduce overhead. For example, a URLLC service is processed quickly, so a quantity of processes occupied by the URLLC service is smaller. Due to a slow processing speed of an eMBB service, the eMBB service needs to be allocated multiple processes to improve system efficiency.
3. If the terminal receives a set of HARQ process configuration corresponding to at least two pieces of DCI, the at least two pieces of DCI include the first DCI; and the terminal configures the HARQ process number domain as 0 bit according to a high-layer signaling, the terminal determines that there is no HARQ process number domain in the first DCI.

It should be noted that carrying at least two pieces of DCI in a set of HARQ process configuration can enable the at least two pieces of DCI to share an RRC signaling, thus reducing signaling overhead.

In another optional embodiment, when the designated domain is a PUCCH resource indicator domain, the terminal determines whether there is a PUCCH resource indicator domain in the first DCI in any of following three ways.
1. If the terminal configures a PUCCH resource indicator domain as 0 bit according to a high-layer signaling, the terminal determines that there is no PUCCH resource indicator domain in the first DCI.
2. The terminal receives at least two sets of Physical Uplink Control Channel Configurations (PUCCH-Configs)/Resource Set to Add Modification List (resourceSetToAddModList) configurations, and the at least two sets of PUCCH-Configs/resourceSetToAddModList configurations correspond to at least two pieces of DCI, wherein the at least two pieces of DCI include the first DCI; when there is no PUCCH-Config/resourceSetToAddModList configuration corresponding to the first DCI in the at least two sets of PUCCH-Configs/resourceSetToAddModList configurations, or, when a PUCCH-Config/resourceSetToAddModList configuration corresponding to the first DCI includes a value, the terminal determines that there is no PUCCH resource indicator domain in the first DCI.
   It should be noted that independently configuring a PUCCH resource parameter for DCI can adapt to different service adjustment transmission strategies, meet different service requirements, and reduce overhead. For example, since a quantity of bits of URLLC service feedback is determined, a unique PUCCH resource configuration is adopted. Multiplexing is adopted for EMBB service feedback, which changes a quantity of bits of the EMBB service feedback, and multiple PUCCH resources need to be allocated to match.
3. If the terminal receives a set of PUCCH-Config/resourceSetToAddModList configuration corresponding to at least two pieces of DCI, wherein the at least two pieces of DCI include the first DCI; and the terminal configures a PUCCH resource indicator domain as 0 bit according to a high-layer signaling, the terminal determines that there is no PUCCH resource indicator domain in the first DCI.

It should be noted that carrying at least two pieces of DCI in a set of PUCCH-Config/ resourceSetToAddModList configuration can enable the at least two pieces of DCI to share an RRC signaling, thus reducing signaling overhead.

When the terminal determines that there is no designated domain in the first DCI, it indicates that the designated domain is configured as 0 bit, at this time, the terminal will determine configuration information of the first DCI according to a network configuration signaling or a pre-set value.

In the embodiment of the present application, the network configuration signaling is a high-layer signaling, wherein the high-layer signaling is an RRC signaling or a Media Access Control Control Element (MAC CE).

In an optional embodiment, when the designated domain is an Antenna port domain and there is no Antenna port domain in first DCI, a first Antenna port is adopted for transmission corresponding to the first DCI, and the first Antenna port is a pre-set value, such as 0, or it is configured for the terminal through a network configuration signaling, typically, it is configured through a high-layer signaling. Through this method that the first Antenna port is configured through the high-layer signaling, flexibility of a system can be increased, for example, Multi User-Multi Input Multi Output (MU-MIMO) may be achieved, a network configures antenna port 0 for a first terminal and configures antenna port 1 for a second terminal, and the two together may achieve MU-MIMO.

In another optional embodiment, when the designated domain is an SRS request domain and there is no SRS request domain in first DCI, transmission corresponding to the first DCI is configured to not trigger SRS transmission or to trigger first SRS transmission. A terminal adopts a first SRS request, and when the first SRS transmission is triggered, the first SRS request is a pre-set value, for example, the first SRS transmission is triggered, or it is configured for the terminal through a network configuration signaling, typically through a high-layer signaling. By means of configuring through a high-layer signaling, flexibility of a system can be increased.

In the embodiment of the present application, optionally, when the SRS request domain is configured as 2 bits, available values are 00, 01, 10, and 11; when the SRS request domain is configured as 0 bit, it may be agreed that a default value configured for the SRS request domain is 00 or 01. Specifically, an operation corresponding to a value of the SRS request domain is shown in Table 1.

**Table 1 Table of an operation corresponding to a value of an SRS request Domain**

| Value of SRS request domain | Trigger operation of aperiodicSRS resource set(s) |
|---|---|
| 00 | Not trigger an aperiodic SRS resource set |
| 01 | Trigger SRS resource set(s) configured with higher-layer parameter(s) - aperiodicSRS resource is set to 1 |
| 10 | Trigger SRS resource set(s) configured with higher-layer parameter(s) - aperiodicSRS resource is set to 2 |
| 11 | Trigger SRS resource set(s) configured with higher-layer parameter(s) - aperiodicSRS resource is set to 3 |

In another optional embodiment, the designated domain is a HARQ process number domain, and when there is no HARQ process number domain in first DCI, a first HARQ process number is adopted for transmission corresponding to the first DCI, the first HARQ process number is a pre-set value, for example, the first HARQ process number is 0 or 1, or it is configured for the terminal through a network configuration signaling, typically, configured through a high-layer signaling. By means of configuring through a high-layer signaling, flexibility of a system can be increased.

In another optional embodiment, the designated domain is a PUCCH resource indicator domain, and when there is no PUCCH resource indicator domain in first DCI, a first PUCCH resource indicator is adopted for transmission corresponding to the first DCI, the first PUCCH resource indicator is a pre-set value. For example, the first PUCCH resource indicator is 0 or 1, or it is configured for the terminal through a network configuration signaling, typically, configured through a high-layer signaling. By means of configuring through a high-layer signaling, flexibility of a system can be increased.

Further, when the terminal determines that there is the designated domain in the first DCI according to a high-layer signaling, a parameter indicated by the designated domain is adopted for transmission corresponding to the first DCI.

In an optional embodiment, when there is an Antenna port domain in the first DCI (i.e., a quantity of bits in the Antenna port domain is greater than 0), an antenna port indicated by an Antenna port is adopted for scheduling data of the first DCI.

In another optional embodiment, when there is an SRS request domain in the first DCI (i.e., a quantity of bits in the SRS request domain is greater than 0), SRS transmission indicated by an SRS request is scheduled and triggered through the first DCI.

In another optional embodiment, when there is a HARQ process number domain in the first DCI (i.e., a quantity of bits in the HARQ process number domain is greater than 0), a HARQ process number indicated by a HARQ process number is adopted for scheduling data of the first DCI.

In another optional embodiment, when there is a PUCCH resource indicator domain in the first DCI (i.e., a quantity of bits in the PUCCH resource indicator domain is greater than 0), the first DCI scheduling data adopts a PUCCH resource indicator indicated by a PUCCH resource indicator is adopted for scheduling data of the first DCI.

It should be noted that when the designated domain is any one of the Antenna port domain, the SRS request domain, or the HARQ process number domain, the first DCI is applied to UL scheduling or DL scheduling; and when the designated domain is the PUCCH resource indicator domain, the first DCI is applied to UL scheduling.

It may be understood that when a terminal determines that there is no designated domain in first DCI, it is indicated that the designated domain is configured as 0 bit. At this time, the terminal determines configuration information of the first DCI according to a network configuration signaling or a pre-set value, and can determine configuration information by itself in a case that configuration information is missing, thereby improves system efficiency.

FIG. 3 is a schematic diagram of structure composition of a method for determining configuration information according to an embodiment of the present application. As shown in FIG. 3, the apparatus for determining configuration information includes: a receiving unit 301 configured for a terminal to receive first Downlink Control Information (DCI); and a determining unit 302 configured for the terminal to determine a value of a designated domain used for data transmission configured through the first DCI according to a network configuration signaling or a pre-set rule if there is no designated domain in the first DCI.

In an optional embodiment, the designated domain is an antenna port domain, and the terminal further includes: a judgment unit configured to determine that there is no antenna port domain in the first DCI if the terminal determines that a quantity of bits of the antenna port domain is 0 according to a high-layer signaling; the receiving unit 301 is further configured for the terminal to receive at least two sets of Demodulation Reference Signal-Uplink Configurations corresponding to at least two pieces of DCI, wherein the at least two pieces of DCI include the first DCI; and the judgment unit is configured to determine there is no antenna port domain in the first DCI when there is no Demodulation Reference Signal-Uplink Configuration corresponding to the first DCI in the at least two sets of Demodulation Reference Signal-Uplink Configurations.

In an optional embodiment, the designated domain is an antenna port domain, the receiving unit 301 is further configured for the terminal to receive at least two sets of Physical Uplink Shared Channel Configurations corresponding to at least two pieces of DCI, wherein the at least two pieces of DCI include the first DCI; and the judgment unit is configured for the terminal to determine that there is no antenna port domain in the first DCI by the terminal when any one of following conditions is met: when a Physical Uplink Shared Channel Configuration corresponding to the first DCI is not configured with Demodulation Reference Signal-Uplink, or is not configured with a transmission configuration, or a transmission configuration is non-Codebook, or a maximum Rank configuration is 1.

In an optional embodiment, the designated domain is an antenna port domain, and the judgment unit is configured to determine that there is no antenna port domain in the first DCI if the terminal receives a set of Demodulation Reference Signal-Uplink Configuration or a set of Physical Uplink Shared Channel Configuration corresponding to at least two pieces of DCI, wherein the at least two pieces of DCI include the first DCI, and the terminal determines that a quantity of bits in the antenna port domain is 0 according to a high-layer signaling.

In an optional embodiment, the designated domain is a Sounding Reference Signal request domain, the judgment unit is configured to determine that there is no Sounding Reference Signal request domain in the first DCI if the terminal determines that a quantity of bits in the Sounding Reference Signal request domain is 0 according to a high-layer signaling; the receiving unit 301 is further configured for the terminal to receive at least two sets of aperiodic Sounding Reference Signal configurations corresponding to at least two pieces of DCI by the terminal, wherein the at least two pieces of DCI include the first DCI; and the judgment unit is configured to determine there is no Sounding Reference Signal request domain in the first DCI when there is no aperiodic Sounding Reference Signal configuration corresponding to the first DCI in the at least two sets of aperiodic Sounding Reference Signal configurations.

In an optional embodiment, the designated domain is a Sounding Reference Signal request domain, and the judgment unit is configured to determine that there is no Sounding Reference Signal request domain in the first DCI if the terminal receives a set of aperiodic Sounding Reference Signal configuration corresponding to at least two pieces of DCI, wherein the at least two pieces of DCI include the first DCI, and the terminal determines that a quantity of bits in the Sounding Reference Signal request domain is 0 according to a high-layer signaling.

In an optional embodiment, the designated domain is a Hybrid Automatic Repeat Request process number domain, the judgment unit is configured to determine that there is no Hybrid Automatic Repeat Request process number domain in the first DCI if the terminal determines that a quantity of bits in the Hybrid Automatic Repeat Request process number domain is 0 according to a high-layer signaling; the receiving unit 301 is further configured for the terminal to receive at least two sets of Hybrid Automatic Repeat Request process configurations corresponding to at least two pieces of DCI by the terminal, wherein the at least two pieces of DCI include the first DCI; and the judgment unit is configured to determine there is no Hybrid Automatic Repeat Request process number domain in the first DCI when there is no Hybrid Automatic Repeat Request process configuration corresponding to the first DCI in the at least two sets of Hybrid Automatic Repeat Request process configurations, or, when a Hybrid Automatic Repeat Request process configuration corresponding to the first DCI includes a value.

In an optional embodiment, the designated domain is a Hybrid Automatic Repeat Request process number domain, the judgment unit is configured to determine that there is no Hybrid Automatic Repeat Request process number domain in the first DCI if the terminal receives a set of Hybrid Automatic Repeat Request process configuration corresponding to at least two pieces of DCI, wherein the at least two pieces of DCI include the first DCI, and the terminal determines that a quantity of bits in the Hybrid Automatic Repeat Request process number domain is 0 according to a high-layer signaling.

In an optional embodiment, the designated domain is a Physical Uplink Control Channel resource indicator domain, the judgment unit is configured to determine that there is no Physical Uplink Control Channel resource indicator domain in the first DCI if the terminal determines that a quantity of bits in the Physical Uplink Control Channel resource indicator domain is 0 according to a high-layer signaling; the receiving unit 301 is further configured for the terminal to receive at least two sets of Physical Uplink Control Channel configurations/Resource Set to Add Modification List configurations corresponding to at least two pieces of DCI by the terminal, wherein the at least two pieces of DCI include the first DCI; and the judgment unit is configured to determine there is no Physical Uplink Control Channel resource indicator domain in the first DCI when there is no Physical Uplink Control Channel configuration/Resource Set to Add Modification List configuration corresponding to the first DCI in the Physical Uplink Control Channel configurations/Resource Set to Add Modification List configurations, or, when a Physical Uplink Control Channel configuration/Resource Set to Add Modification List configuration corresponding to the first DCI includes a value.

In an optional embodiment, the designated domain is a Physical Uplink Control Channel resource indicator domain, the judgment unit is configured to determine that there is no Physical Uplink Control Channel resource indicator domain in the first DCI if the terminal receives a set of Physical Uplink Control Channel configuration/Resource Set to Add Modification List configuration corresponding to at least two pieces of DCI, wherein the at least two pieces of DCI include the first DCI, and the terminal determines that a quantity of bits in the Physical Uplink Control Channel resource indicator domain is 0 according to a high-layer signaling.

In an optional embodiment, the determining unit 302 is further configured to determine that a parameter indicated by the designated domain is adopted for transmission corresponding to the first DCI when the terminal determines that there is the designated domain in the first DCI according to a high-layer signaling.

In an optional embodiment, the network configuration signaling is a high-layer signaling.

In an optional embodiment, the designated domain is an antenna port domain, the determining unit 302 is further configured to determine that a first antenna port is adopted for transmission corresponding to the first DCI when there is no antenna port domain in the first DCI, wherein the first antenna port is a pre-set value or configured for the terminal through a network configuration signaling.

In an optional embodiment, the designated domain is a Sounding Reference Signal request domain, the determining unit 302 is further configured to: when there is no Sounding Reference Signal request domain in the first DCI, transmission corresponding to the first DCI is configured to not trigger Sounding Reference Signal transmission or to trigger first Sounding Reference Signal transmission; and when a first Sounding Reference Signal request is used for triggering the first Sounding Reference Signal transmission, the first Sounding Reference Signal request is a pre-set value or configured for the terminal through a network configuration signaling.

In an optional embodiment, the designated domain is a Hybrid Automatic Repeat Request process number domain, the determining unit 302 is further configured to: a first Hybrid Automatic Repeat Request process number is adopted for transmission corresponding to the first DCI when there is no Hybrid Automatic Repeat Request process number domain in the first DCI, wherein the first Hybrid Automatic Repeat Request process number is a pre-set value or configured for the terminal through a network configuration signaling.

In an optional embodiment, the designated domain is a Physical Uplink Control Channel resource indicator domain, and the determining unit 302 is further configured to: a first Physical Uplink Control Channel resource indicator is adopted for transmission corresponding to the first DCI when there is no Physical Uplink Control Channel resource indicator domain in the first DCI, wherein the first Physical Uplink Control Channel resource indicator is a pre-set value or configured for the terminal through a network configuration signaling.

In an optional embodiment, the first DCI is applied to Uplink (UL) scheduling or Downlink (DL) scheduling when the designated domain is any one of an antenna port domain, a Sounding Reference Signal request domain, or a Hybrid Automatic Repeat Request process number domain.

In an optional embodiment, the first DCI is applied to Uplink (UL) scheduling when the designated domain is a Physical Uplink Control Channel resource indicator domain.

Those skilled in the art should understand that the related description of the apparatuses for determining configuration information according to the embodiments of the present application may be understood with reference to the related description of the methods for determining configuration information according to the embodiments of the present application.

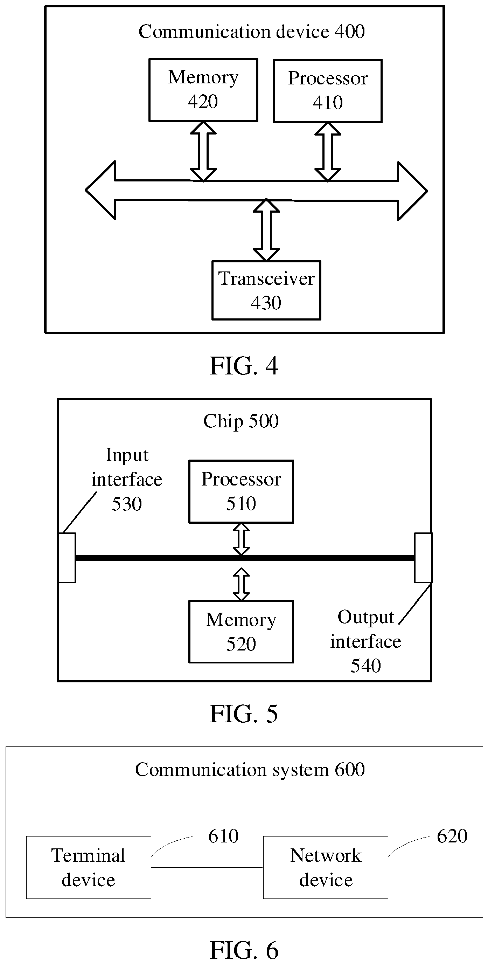

FIG. 4 is a schematic diagram of a structure of a communication device 400 according to an embodiment of the present application. The communication device may be a terminal device or a network device. The communication device 400 shown in FIG. 4 includes a processor 410, which may call and run a computer program from a memory to implement the methods in the embodiments of the present application.

Optionally, as shown in FIG. 4, the communication device 400 may further include a memory 420. Herein, the processor 410 may call and run a computer program from the memory 420 to implement the methods in the embodiments of the present application.

Herein, the memory 420 may be a separate device independent of the processor 410, or may be integrated in the processor 410.

Optionally, as shown in FIG. 4, the communication device 400 may further include a transceiver 430, and the processor 410 may control the transceiver 430 to communicate with another device. Specifically, the transceiver 730 may send information or data to another device or receive information or data sent by another device.

Herein, the transceiver 430 may include a transmitter and a receiver. The transceiver 430 may further include antennas, a quantity of which may be one or more.

Optionally, the communication device 400 may specifically be the network device according to the embodiments of the present application, and the communication device 400 may implement corresponding processes implemented by the network device in various methods in the embodiments of the present application, which will not be repeated here for brevity.

Optionally, the communication device 400 may be specifically the mobile terminal/terminal device according to the embodiments of the present application, and the communication device 400 may implement corresponding processes implemented by the mobile terminal/terminal device in various methods in the embodiments of the present application, which will not be repeated here for brevity.

FIG. 5 is a schematic diagram of a structure of a chip according to an embodiment of the present application. The chip 500 shown in FIG. 5 includes a processor 510, wherein the processor 510 may call and run a computer program from a memory to implement the methods in the embodiments of the present application.

Optionally, as shown in FIG. 5, the chip 500 may further include a memory 520. Herein, the processor 510 may call and run a computer program from the memory 520 to implement the methods in the embodiments of the present application.

Herein, the memory 520 may be a separate device independent of the processor 510, or may be integrated in the processor 510.

Optionally, the chip 500 may further include an input interface 530. Herein, the processor 510 may control the input interface 530 to communicate with another device or chip. Specifically, the processor 410 may acquire information or data sent by another device or chip.

Optionally, the chip 500 may further include an output interface 540. Herein, the processor 510 may control the output interface 540 to communicate with another device or chip. Specifically, the processor 410 may output information or data to another device or chip.

Optionally, the chip may be applied to the network device in the embodiments of the present application, and the chip may implement corresponding processes implemented by the network device in the various methods in the embodiments of the present application, which will not be repeated here for brevity.

Optionally, the chip may be applied to the mobile terminal/terminal device in the embodiments of the present application, and the chip may implement corresponding processes implemented by the mobile terminal/terminal device in the various methods in the embodiments of the present application, which will not be repeated here for brevity.

It should be understood that the chip mentioned in the embodiments of the present application may also be referred to as a system-level chip, a system chip, a chip system, or a system on chip, etc.

FIG. 6 is a schematic block diagram of a communication system 600 according to an embodiment of the present application. As shown in FIG. 6, the communication system 600 includes a terminal device 610 and a network device 620.

The terminal device 610 may be configured to implement corresponding functions implemented by the terminal device in the above-mentioned methods, and the network device 620 may be configured to implement corresponding functions implemented by the network device in the above-mentioned methods, which will not be repeated here for brevity.

It should be understood that the processor in the embodiments of the present application may be an integrated circuit chip with a capability for processing signals. In an implementation process, various acts of the method embodiments described above may be completed through an integrated logic circuit of hardware in a processor or instructions in a form of software. The above processor may be a general purpose processor, a Digital Signal Processor (DSP), an Application Specific Integrated Circuit (ASIC), a Field Programmable Gate Array (FPGA), or another programmable logic device, a discrete gate or transistor logic device, or a discrete hardware component. The processor may implement various methods, acts, and logic block diagrams disclosed in the embodiments of the present application. The general purpose processor may be a microprocessor or the processor may be any conventional processor or the like. The acts of the methods disclosed in connection with the embodiments of the present application may be directly embodied by execution of a hardware decoding processor, or by execution of a combination of hardware and software modules in a decoding processor. The software modules may be located in a storage medium commonly used in the art, such as a random access memory, a flash memory, a read-only memory, a programmable read-only memory or an electrically erasable programmable memory, or a register. The storage medium is located in a memory, and a processor reads information in the memory and completes the acts of the above methods in combination with its hardware.

It should be understood that the memory in the embodiments of the present application may be a transitory memory or a non-transitory memory, or may include both transitory and non-transitory memory. The non-transitory memory may be a Read-Only Memory (ROM), a Programmable ROM (PROM), an Erasable PROM (EPROM), an Electrically EPROM (EEPROM), or a flash memory. The transitory memory may be a Random Access Memory (RAM) which serves as an external cache. As an example, but not as a limitation, many forms of RAMs are available, such as a Static RAM (SRAM), a Dynamic RAM (DRAM), a Synchronous DRAM (SDRAM), a Double Data Rate SDRAM (DDR SDRAM), an Enhanced SDRAM (ESDRAM), a Synchlink DRAM (SLDRAM), and a Direct Rambus RAM (DR RAM). It should be noted that the memories of the systems and methods described herein are intended to include, but are not limited to, these and any other suitable types of memories.

It should be understood that, the foregoing memories are examples for illustration and should not be construed as limitations. For example, the memory in the embodiments of the present application may be a Static RAM (SRAM), a Dynamic RAM (DRAM), a Synchronous DRAM (SDRAM), a Double Data Rate SDRAM (DDR SDRAM), an Enhanced SDRAM (ESDRAM), a Synch Link DRAM (SLDRAM), a Direct Rambus RAM (DR RAM), etc. That is to say, the memories in the embodiments of the present application are intended to include, but are not limited to, these and any other suitable types of memories.

An embodiment of the present application further provides a computer readable storage medium, configured to store a computer program.

Optionally, the computer readable storage medium may be applied to a network device in an embodiment of the present application, and the computer program enables a computer to perform corresponding processes implemented by the network device in various methods according to the embodiments of the present application, which will not be repeated here for brevity.

Optionally, the computer readable storage medium may be applied to the mobile terminal/terminal device in the embodiments of the present application, and the computer program enables a computer to perform corresponding processes implemented by the mobile terminal/terminal device in various methods according to the embodiments of the present application, which will not be repeated here for brevity.

An embodiment of the present application further provides a computer program product, including computer program instructions.

Optionally, the computer program product may be applied to a network device in an embodiment of the present application, and the computer program instructions enable a computer to perform corresponding processes implemented by the network device in various methods according to the embodiments of the present application, which will not be repeated here for brevity.

Optionally, the computer program product may be applied to the mobile terminal/terminal device in the embodiments of the present application, and the computer program instructions enable a computer to perform corresponding processes implemented by the mobile terminal/terminal device in various methods according to the embodiments of the present application, which will not be repeated here for brevity.

An embodiment of the present application further provides a computer program.

Optionally, the computer program may be applied to a network device in an embodiment of the present application. When the computer program is run on a computer, the computer is enabled to perform corresponding processes implemented by the network device in various methods according to the embodiments of the present application, which will not be repeated here for brevity.

Optionally, the computer program may be applied to the mobile terminal/terminal device in the embodiments of the present application. When the computer program is run on a computer, the computer is enabled to perform corresponding processes implemented by the mobile terminal/terminal device in various methods according to the embodiments of the present application, which will not be repeated here for brevity.

Those of ordinary skills in the art will recognize that units and algorithm acts of various examples described in connection with the embodiments disclosed herein may be implemented in electronic hardware, or a combination of computer software and electronic hardware. Whether these functions are implemented in a form of hardware or software depends on a specific application and a design constraint of a technical solution. Those skilled in the art may use different methods to implement the described functions for each specific application, but such implementation should not be considered to be beyond the scope of the present application.

Those skilled in the art may clearly understand that for convenience and conciseness of description, specific working processes of the systems, apparatuses, and units described above may refer to corresponding processes in the aforementioned method embodiments, and details will not be repeated here.

In several embodiments according to the present application, it should be understood that the disclosed systems, apparatuses, and methods may be implemented in other ways. For example, the apparatus embodiments described above are only illustrative. For example, a division of the units is only a division of logical functions, and there may be other division manners in actual implementations. For example, multiple units or components may be combined or integrated into another system, or some features may be ignored or not executed. In addition, mutual coupling or direct coupling or communication connection shown or discussed may be indirect coupling or communication connection through some interfaces, apparatuses, or units, and may be in electrical, mechanical, or in other forms.

The units described as separated components may or may not be physically separated, and components shown as units may or may not be physical units, i.e., they may be located in one place or may be distributed over multiple network units. Some or all of the units may be selected according to practical needs to achieve purposes of solutions of the embodiments.

In addition, various functional units in various embodiments of the present application may be integrated in one processing unit, or various units may be physically present separately, or two or more units may be integrated in one unit.

The functions may be stored in a computer readable storage medium if implemented in a form of a software functional unit and sold or used as a separate product. Based on such understanding, technical solutions of the present application, in essence, or a part contributing to the existing art, or part of the technical solutions, may be embodied in a form of a software product stored in a storage medium, the computer software product includes several instructions for enabling a computer device (which may be a personal computer, a server, or a network device, etc.) to perform all or part of the acts of the methods described in various embodiments of the present application. The aforementioned storage medium includes: various media, such as a U disk, a mobile hard disk, a Read-Only Memory (ROM), a Random Access Memory (RAM), a magnetic disk, or an optical disk, which may store program codes.

The foregoing are merely specific embodiments of the present application, but the protection scope of the present application is not limited thereto. Any person skilled in the art may readily conceive variations or substitutions within the technical scope disclosed by the present application, which should be included within the protection scope of the present application. Therefore, the protection scope of the present application should be subject to the protection scope of claims.

## Claims

1. A method for determining configuration information, comprising:
receiving, by a terminal, first Downlink Control Information (DCI); and
determining, by the terminal, according to a network configuration signaling or a pre-set rule, a value of a designated domain used for data transmission configured through the first DCI if there is no designated domain in the first DCI.

2. The method according to claim 1, wherein the designated domain is an antenna port domain, and the method further comprises:
determining that there is no antenna port domain in the first DCI if the terminal determines that a quantity of bits in the antenna port domain is 0 according to a high-layer signaling;
or,
receiving, by the terminal, at least two sets of Demodulation Reference Signal-Uplink Configurations corresponding to at least two pieces of DCI, wherein the at least two pieces of DCI comprise the first DCI,
wherein there is no antenna port domain in the first DCI when there is no Demodulation Reference Signal-Uplink Configuration corresponding to the first DCI in the at least two sets of Demodulation Reference Signal-Uplink Configurations.

3. The method according to claim 1, wherein the designated domain is an antenna port domain, and the method further comprises:
receiving, by the terminal, at least two sets of Physical Uplink Shared Channel Configurations corresponding to at least two pieces of DCI, wherein the at least two pieces of DCI comprise the first DCI; and
determining, by the terminal, that there is no antenna port domain in the first DCI when any one of following conditions is met:
when a Physical Uplink Shared Channel Configuration corresponding to the first DCI is not configured with Demodulation Reference Signal-Uplink, or is not configured with a transmission configuration, or a transmission configuration is non-codebook, or a maximum Rank configuration is 1.

4. The method according to claim 2, wherein the designated domain is an antenna port domain, and the determining that there is no antenna port domain in the first DCI if the terminal determines that the quantity of bits in the antenna port domain is 0 according to the high-layer signaling comprises:
determining that there is no antenna port domain in the first DCI if the terminal receives a set of Demodulation Reference Signal-Uplink Configuration or a set of Physical Uplink Shared Channel Configuration, which corresponds to at least two pieces of DCI, wherein the at least two pieces of DCI comprise the first DCI, and the terminal determines that the quantity of bits in the antenna port domain is 0 according to the high-layer signaling.

5. The method according to claim 1, wherein the designated domain is a Sounding Reference Signal request domain, and the method further comprises:
determining that there is no Sounding Reference Signal request domain in the first DCI if the terminal determines that a quantity of bits in the Sounding Reference Signal request domain is 0 according to a high-layer signaling;
or,
receiving, by the terminal, at least two sets of aperiodic Sounding Reference Signal configurations corresponding to at least two pieces of DCI, wherein the at least two pieces of DCI comprise the first DCI,
wherein there is no Sounding Reference Signal request domain in the first DCI when there is no aperiodic Sounding Reference Signal configuration corresponding to the first DCI in the at least two sets of aperiodic Sounding Reference Signal configurations.

6. The method according to claim 5, wherein the designated domain is a Sounding Reference Signal request domain, and the determining that there is no Sounding Reference Signal request domain in the first DCI if the terminal determines that the quantity of bits in the Sounding Reference Signal request domain is 0 according to the high-layer signaling comprises:
determining that there is no Sounding Reference Signal request domain in the first DCI if the terminal receives a set of aperiodic Sounding Reference Signal configuration corresponding to at least two pieces of DCI, wherein the at least two pieces of DCI comprise the first DCI, and the terminal determines that the quantity of bits in the Sounding Reference Signal request domain is 0 according to the high-layer signaling.

7. The method according to claim 1, wherein the designated domain is a Hybrid Automatic Repeat Request process number domain, and the method further comprises:
determining that there is no Hybrid Automatic Repeat Request process number domain in the first DCI if the terminal determines that a quantity of bits in the Hybrid Automatic Repeat Request process number domain is 0 according to a high-layer signaling;
or,
receiving, by the terminal, at least two sets of Hybrid Automatic Repeat Request process configurations corresponding to at least two pieces of DCI, wherein the at least two pieces of DCI comprise the first DCI,
wherein there is no Hybrid Automatic Repeat Request process number domain in the first DCI when there is no Hybrid Automatic Repeat Request process configuration corresponding to the first DCI in the at least two sets of Hybrid Automatic Repeat Request process configurations, or, when a Hybrid Automatic Repeat Request process configuration corresponding to the first DCI comprises a value.

8. The method according to claim 7, wherein the designated domain is a Hybrid Automatic Repeat Request process number domain, and the determining that there is no Hybrid Automatic Repeat Request process number domain in the first DCI if the terminal determines that the quantity of bits in the Hybrid Automatic Repeat Request process number domain is 0 according to the high-layer signaling comprises:
determining that there is no Hybrid Automatic Repeat Request process number domain in the first DCI if the terminal receives a set of Hybrid Automatic Repeat Request process configuration corresponding to at least two pieces of DCI, wherein the at least two pieces of DCI comprise the first DCI, and the terminal determines that the quantity of bits in the Hybrid Automatic Repeat Request process number domain is 0 according to the high-layer signaling.

9. The method according to claim 1, wherein the designated domain is a Physical Uplink Control Channel resource indicator domain, and the method further comprises:
determining that there is no Physical Uplink Control Channel resource indicator domain in the first DCI if the terminal determines that a quantity of bits in the Physical Uplink Control Channel resource indicator domain is 0 according to a high-layer signaling;
or,
receiving, by the terminal, at least two sets of Physical Uplink Control Channel configurations/Resource Set to Add Modification List configurations corresponding to at least two pieces of DCI, wherein the at least two pieces of DCI comprise the first DCI,
wherein there is no Physical Uplink Control Channel resource indicator domain in the first DCI when there is no Physical Uplink Control Channel configuration/Resource Set to Add Modification List configuration corresponding to the first DCI in the at least two sets of Physical Uplink Control Channel configurations/Resource Set to Add Modification List configurations, or, when a Physical Uplink Control Channel configuration/Resource Set to Add Modification List configuration corresponding to the first DCI comprises a value.

10. The method according to claim 9, wherein the designated domain is a Physical Uplink Control Channel resource indicator domain, and the determining that there is no Physical Uplink Control Channel resource indicator domain in the first DCI if the terminal determines that the quantity of bits in the Physical Uplink Control Channel resource indicator domain is 0 according to the higher-level signaling comprises:
determining that there is no Physical Uplink Control Channel resource indicator domain in the first DCI if the terminal receives a set of Physical Uplink Control Channel configuration/Resource Set to Add Modification List configuration corresponding to at least two pieces of DCI, wherein the at least two pieces of DCI comprise the first DCI, and the terminal determines that the quantity of bits in the Physical Uplink Control Channel resource indicator domain is 0 according to the high-layer signaling.

11. The method according to claim 1, further comprising:
adopting a parameter indicated by the designated domain for transmission corresponding to the first DCI when the terminal determines that there is the designated domain in the first DCI according to a high-layer signaling.

12. The method according to claim 1, wherein the network configuration signaling is a high-layer signaling.

13. The method according to claim 1, wherein the designated domain is an antenna port domain, and the method further comprises:
adopting a first antenna port for transmission corresponding to the first DCI when there is no antenna port domain in the first DCI, wherein the first antenna port is a pre-set value or configured for the terminal through a network configuration signaling.

14. The method according to claim 1, wherein the designated domain is a Sounding Reference Signal request domain, and the method further comprises:
configuring transmission corresponding to the first DCI to not trigger Sounding Reference Signal transmission or to trigger first Sounding Reference Signal transmission when there is no Sounding Reference Signal request domain in the first DCI; wherein
when a first Sounding Reference Signal request is used for triggering the first Sounding Reference Signal transmission, the first Sounding Reference Signal request is a pre-set value or configured for the terminal through a network configuration signaling.

15. The method according to claim 1, wherein the designated domain is a Hybrid Automatic Repeat Request process number domain, and the method further comprises:
adopting a first Hybrid Automatic Repeat Request process number for transmission corresponding to the first DCI when there is no Hybrid Automatic Repeat Request process number domain in the first DCI, wherein the first Hybrid Automatic Repeat Request process number is a pre-set value or configured for the terminal through a network configuration signaling.

16. The method according to claim 1, wherein the designated domain is a Physical Uplink Control Channel resource indicator domain, and the method further comprises:
adopting a first Physical Uplink Control Channel resource indicator for transmission corresponding to the first DCI when there is no Physical Uplink Control Channel resource indicator domain in the first DCI, wherein the first Physical Uplink Control Channel resource indicator is a pre-set value or configured for the terminal through a network configuration signaling.

17. The method according to claim 1, wherein the first DCI is applied to Uplink (UL) scheduling or Downlink (DL) scheduling when the designated domain is any one of an antenna port domain, a Sounding Reference Signal request domain, or a Hybrid Automatic Repeat Request process number domain.

18. The method according to claim 1, wherein the first DCI is applied to Uplink (UL) scheduling when the designated domain is a Physical Uplink Control Channel resource indicator domain.

19. An apparatus for determining configuration information, comprising:
a receiving unit configured for a terminal to receive first Downlink Control Information (DCI);
a determining unit configured for the terminal to determine a value of a designated domain used for data transmission configured through the first DCI according to a network configuration signaling or a pre-set rule if there is no designated domain in the first DCI.

20. The apparatus according to claim 19, wherein the designated domain is an antenna port domain and the terminal further comprises:
a judgment unit configured to determine that there is no antenna port domain in the first DCI if the terminal determines that a quantity of bits in the antenna port domain is 0 according to a high-layer signaling;
the receiving unit is further configured for the terminal to receive at least two sets of Demodulation Reference Signal-Uplink Configurations corresponding to at least two pieces of DCI, wherein the at least two pieces of DCI comprise the first DCI;
the judgment unit is configured to determine that there is no antenna port domain in the first DCI when there is no Demodulation Reference Signal-Uplink Configuration corresponding to the first DCI in the at least two sets of Demodulation Reference Signal-Uplink Configurations.

21. The apparatus according to claim 19, wherein the designated domain is an antenna port domain,
the receiving unit is further configured for the terminal to receive at least two sets of Physical Uplink Shared Channel Configurations corresponding to at least two pieces of DCI, wherein the at least two pieces of DCI comprise the first DCI;
a judgment unit is configured for the terminal to determine that there is no antenna port domain in the first DCI when any one of following conditions is met: when a Physical Uplink Shared Channel Configuration corresponding to the first DCI is not configured with Demodulation Reference Signal-Uplink, or is not configured with a transmission configuration, or a transmission configuration is non-codebook, or a maximum Rank configuration is 1.

22. The apparatus according to claim 19, wherein the designated domain is an antenna port domain,
a judgment unit is configured to determine that there is no antenna port domain in the first DCI if the terminal receives a set of Demodulation Reference Signal-Uplink Configuration or a set of Physical Uplink Shared Channel Configuration, which corresponds to at least two pieces of DCI, wherein the at least two pieces of DCI comprise the first DCI, and the terminal determines that a quantity of bits in the antenna port domain is 0 according to a high-layer signaling.

23. The apparatus according to claim 19, wherein the designated domain is a Sounding Reference Signal request domain,
a judgment unit is configured to determine that there is no Sounding Reference Signal request domain in the first DCI if the terminal determines that a quantity of bits in the Sounding Reference Signal request domain is 0 according to a high-layer signaling;
the receiving unit is further configured for the terminal to receive at least two sets of aperiodic Sounding Reference Signal configurations corresponding to at least two pieces of DCI, wherein the at least two pieces of DCI comprise the first DCI;
the judgment unit is configured to determine that there is no Sounding Reference Signal request domain in the first DCI when there is no aperiodic Sounding Reference Signal configuration corresponding to the first DCI in the at least two sets of aperiodic Sounding Reference Signal configurations.

24. The apparatus according to claim 23, wherein the designated domain is a Sounding Reference Signal request domain,
the judgment unit is configured to determine that there is no Sounding Reference Signal request domain in the first DCI if the terminal receives a set of aperiodic Sounding Reference Signal configuration corresponding to at least two pieces of DCI, wherein the at least two pieces of DCI comprise the first DCI, and the terminal determines that a quantity of bits in the Sounding Reference Signal request domain is 0 according to a high-layer signaling.

25. The apparatus according to claim 19, wherein the designated domain is a Hybrid Automatic Repeat Request process number domain,
a judgment unit is configured to determine that there is no Hybrid Automatic Repeat Request process number domain in the first DCI if the terminal determines that a quantity of bits in the Hybrid Automatic Repeat Request process number domain is 0 according to a high-layer signaling;
the receiving unit is further configured for the terminal to receive at least two sets of Hybrid Automatic Repeat Request process configurations corresponding to at least two pieces of DCI, wherein the at least two pieces of DCI comprise the first DCI;
the judgment unit is configured to determine that there is no Hybrid Automatic Repeat Request process number domain in the first DCI when there is no Hybrid Automatic Repeat Request process configuration corresponding to the first DCI in the at least two sets of Hybrid Automatic Repeat Request process configurations, or, when a Hybrid Automatic Repeat Request process configuration corresponding to the first DCI comprises a value.

26. The apparatus according to claim 25, wherein the designated domain is a Hybrid Automatic Repeat Request process number domain,
the judgment unit is configured to determine that there is no Hybrid Automatic Repeat Request process number domain in the first DCI if the terminal receives a set of Hybrid Automatic Repeat Request process configuration corresponding to at least two pieces of DCI, wherein the at least two pieces of DCI comprise the first DCI, and the terminal determines that a quantity of bits in the Hybrid Automatic Repeat Request process number domain is 0 according to a high-layer signaling.

27. The apparatus according to claim 19, wherein the designated domain is a Physical Uplink Control Channel resource indicator domain,
a judgment unit is configured to determine that there is no Physical Uplink Control Channel resource indicator domain in the first DCI if the terminal determines that a quantity of bits in the Physical Uplink Control Channel resource indicator domain is 0 according to a high-layer signaling;
the receiving unit is further configured for the terminal to receive at least two sets of Physical Uplink Control Channel configurations/Resource Set to Add Modification List configurations corresponding to at least two pieces of DCI, wherein the at least two pieces of DCI comprise the first DCI;
the judgment unit is configured to determine that there is no Physical Uplink Control Channel resource indicator domain in the first DCI when there is no Physical Uplink Control Channel configuration/Resource Set to Add Modification List configuration corresponding to the first DCI in the Physical Uplink Control Channel configurations/Resource Set to Add Modification List configurations, or, when a Physical Uplink Control Channel configuration/Resource Set to Add Modification List configuration corresponding to the first DCI comprises a value.

28. The apparatus according to claim 27, wherein the designated domain is a Physical Uplink Control Channel resource indicator domain,
the judgment unit is configured to determine that there is no Physical Uplink Control Channel resource indicator domain in the first DCI if the terminal receives a set of Physical Uplink Control Channel configuration/Resource Set to Add Modification List configuration corresponding to at least two pieces of DCI, wherein the at least two pieces of DCI comprise the first DCI, and the terminal determines that a quantity of bits in the Physical Uplink Control Channel resource indicator domain is 0 according to a high-layer signaling.

29. The apparatus according to claim 19, wherein
the determining apparatus is further configured to determine that a parameter indicated by the designated domain is adopted for transmission corresponding to the first DCI when the terminal determines that there is the designated domain in the first DCI according to a high-layer signaling.

30. The apparatus according to claim 19, wherein the network configuration signaling is a high-layer signaling.

31. The apparatus according to claim 19, wherein the designated domain is an antenna port domain,
the determining unit is further configured to determine that a first antenna port is adopted for transmission corresponding to the first DCI when there is no antenna port domain in the first DCI, wherein the first antenna port is a pre-set value or configured for the terminal through a network configuration signaling.

32. The apparatus according to claim 19, wherein the designated domain is a Sounding Reference Signal request domain,
the determining unit is further configured to determine that transmission corresponding to the first DCI is configured to not trigger Sounding Reference Signal transmission or to trigger first Sounding Reference Signal transmission when there is no Sounding Reference Signal request domain in the first DCI; when a first Sounding Reference Signal request is used for triggering the first Sounding Reference Signal transmission, the first Sounding Reference Signal request is a pre-set value or configured for the terminal through a network configuration signaling.

33. The apparatus according to claim 19, wherein the designated domain is a Hybrid Automatic Repeat Request process number domain,
the determining unit is further configured to determine that a first Hybrid Automatic Repeat Request process number is adopted for transmission corresponding to the first DCI when there is no Hybrid Automatic Repeat Request process number domain in the first DCI, wherein the first Hybrid Automatic Repeat Request process number is a pre-set value or configured for the terminal through a network configuration signaling.

34. The apparatus according to claim 19, wherein the designated domain is a Physical Uplink Control Channel resource indicator domain, and
the determining unit is further configured to determine that a first Physical Uplink Control Channel resource indicator is adopted for transmission corresponding to the first DCI when there is no Physical Uplink Control Channel resource indicator domain in the first DCI, wherein the first Physical Uplink Control Channel resource indicator is a pre-set value or configured for the terminal through a network configuration signaling.

35. The apparatus according to claim 19, wherein the first DCI is applied to Uplink (UL) scheduling or Downlink (DL) scheduling when the designated domain is any one of an antenna port domain, a Sounding Reference Signal request domain, or a Hybrid Automatic Repeat Request process number domain.

36. The apparatus according to claim 19, wherein the first DCI is applied to Uplink (UL) scheduling when the designated domain is a Physical Uplink Control Channel resource indicator domain.

37. A terminal, comprising: a processor and a memory, wherein the memory is configured to store a computer program, and the processor is configured to call and run the computer program stored in the memory to perform the method according to any one of claims 1 to 18.

38. A chip, comprising: a processor configured to call and run a computer program from a memory, to enable a device installed with the chip to perform the method according to any one of claims 1 to 18.

39. A computer-readable storage medium, configured to store a computer program that enables a computer to perform the method according to any one of claims 1 to 18.

40. A computer program product, comprising computer program instructions that enable a computer to perform the method according to any one of claims 1 to 18.

41. A computer program, wherein the computer program enables a computer to perform the method according to any one of claims 1 to 18.
